# EUROPÄISCHE PATENTANMELDUNG

(11) **EP 4 851 096 A1**
(43) Veröffentlichungstag der Anmeldung: **09.12.2026**
(21) Anmeldenummer: 26176445.0
(22) Anmeldetag: 05.05.2026
(51) Int. Cl.: B66F 9/06, B66F 9/14, B66F 9/075

(54) **AUTONOMES, BODENGEBUNDENES FLURFÖRDERZEUG UND VERFAHREN ZUM BELADEN EINER LADEFLÄCHE, INSBESONDERE EINER LADEFLÄCHE EINES LASTKRAFTWAGENS ODER EINES CONTAINERS, MIT LADUNGSTRÄGERN MITTELS EINES AUTONOMEN, BODENGEBUNDENEN FLURFÖRDERZEUGS**

(30) Priorität: 27.05.2025 DE 102025120650
(71) Anmelder: Linde Material Handling GmbH, 63743 Aschaffenburg (DE)
(72) Erfinder: Schulz, Tim, 74838 Limbach (DE); Schmale, Christopher Gwydion, 64741 Aschaffenburg (DE)
(74) Vertreter: Patentship Patentanwaltgesellschaft

(57) **Zusammenfassung**

Die Erfindung betrifft ein autonomes, bodengebundenes Flurförderzeug (1) umfassend einen Fahrantrieb und ein Lastaufnahmemittel (4), das als Lastgabel mit zwei Gabelzinken (4a, 4b) ausgebildet ist. Das Flurförderzeug (1) weist eine erste Sensoreinrichtung (11) auf, die ausgebildet ist, eine Relativbewegung eines auf den Gabelzinken (4a, 4b) befindlichen Ladungsträgers (TP1; TP2, TP3) in Fahrzeugquerrichtung (Q) des Flurförderzeugs zu ermitteln, und eine zweite Sensoreinrichtung (15) auf, die ausgebildet ist, eine Relativbewegung des auf den Gabelzinken (4a, 4b) befindlichen Ladungsträgers (TP1; TP2; TP3) in Fahrzeuglängsrichtung (L) des Flurförderzeugs (1) zu ermitteln.

## Beschreibung

Die Erfindung betrifft ein autonomes, bodengebundenes Flurförderzeug umfassend einen Fahrantrieb und ein Lastaufnahmemittel, das als Lastgabel mit zwei Gabelzinken ausgebildet ist.

Weiterhin betrifft die Erfindung ein Verfahren zum Beladen einer Ladefläche, insbesondere einer Ladefläche eines Lastkraftwagens oder eines LKW-Anhängers oder eines Containers, mit Ladungsträgern mittels eines derartigen autonomen, bodengebundenen Flurförderzeugs.

Zum Transportieren von Lasten werden bei logistischen Prozessen, z.B. beim Beladen von Lastkraftwagen, in jüngster Zeit häufig fahrerlose Transportfahrzeuge verwendet. Unter fahrerlosen Transportfahrzeugen (FTF, englisch: Automated Guided Vehicle, AGV) versteht man autonome, bodengebundene Flurförderzeuge mit eigenem Fahrantrieb, die automatisiert und fahrerlos gesteuert und berührungslos geführt werden. Ein autonomes, bodengebundenes Flurförderzeug wird mit einem Ladungsträger beladen oder nimmt einen Ladungsträger selbstständig auf. Bei den Ladungsträgern handelt es sich in der Regel um Paletten, beispielsweise Euro-Paletten, sogenannte EPAL EUR Paletten, Gitterwagen oder Gitterboxen. Das autonome, bodengebundene Flurförderzeug weist für die Aufnahme eines Ladungsträgers ein Lastaufnahmemittel auf, das als Lastgabel mit zwei Gabelzinken ausgebildet ist.

Beim Verladen von Paletten und anderen Ladungsträgern in einer Ladefläche eines Lastkraftwagens, eines LKW-Anhängers oder eines Containers von hinten, d.h. von einer hinteren Ladewand aus, ist der Platz in Lastkraftwagen, LKW-Anhängern und Containern im europäischen Raum sehr begrenzt. Bei standardisierten Europalatten werden verschiedene Packmuster verfolgt, um den verfügbaren Platz in der Ladefläche optimal zu nutzen. Am weitesten verbreitet sind ein erstes Lademuster, bei dem mehrere Ladereihen vorhanden sind, wobei pro Ladereihe zwei Paletten mit der breiten Seite voran auf der Ladefläche abgestellt werden, oder ein zweites Lademuster, bei dem mehrere Ladereihen vorhanden sind, wobei pro Ladereihe drei Paletten mit der schmalen Seite voran auf der Ladefläche abgestellt werden.

Sobald die Ladefläche des Lastkraftwagens, LKW-Anhängers oder Containers mit Paletten vollgeladen ist, bleiben nur schmale Spalte zwischen den Paletten, so dass beim Absetzen der einzelnen Paletten auf der Ladefläche hohen Anforderungen an die Platzierungsgenauigkeit der einzelnen Paletten gestellt werden. Durch die hohen Anforderungen an die Genauigkeit der Palettenplatzierung, die sich ändernden äußeren Einflüsse und die unterschiedlichen Beladungszustände der Palettenbeladungen ist der Prozess des Beladens einer Ladefläche eines Lastkraftwagens, LKW-Anhängers oder Containers mit einem autonomen Flurförderzeug bislang noch nicht robust automatisiert. Teilweise beschädigte Paletten, verrutschte Ladungen auf den Paletten, beschädigte Ladeflächen oder Unebenheiten im Boden der Ladefläche können dazu führen, dass der Prozess des Beladens einer Ladefläche eines Lastkraftwagens, LKW-Anhängers oder Containers mit einem autonomen Flurförderzeug instabil ist und die gewünschten Anforderungen an die Prozess-Robustheit nicht erreicht.

Durch die nur sehr schmalen Toleranzen der finalen Ladungsträge-Positionen und die sehr wechselhaften äußerlichen Einflüssen entstehen sehr hohe Anforderungen an die Genauigkeit und Robustheit für den Verladeprozess. Durch kleinste Fehler in der Ladungsträgerablage auf der Ladefläche können von dem autonomen Flurförderzeuge Ladereihen nicht mit allen gewünschten Ladungsträgern vervollständigt werden oder nicht genügend Ladereihen von Ladungsträgern in die Ladefläche geladen werden.

Aktuelle automatisierte Ladeprozesse von Ladeflächen von Lastkraftwagen oder LKW-Anhängern mittels eines autonomen Flurförderzeugs sehen vor, dass jede Palettenposition auf der Ladefläche global festgelegt ist. Der Nachteil dieser Art des Platzierens der Paletten besteht darin, dass Fehler durch ungenaue Navigation bzw. Lokalisierung des autonomen Flurförderzeugs, unerwartet verschobene Paletten, verrutschte Ladungen auf den Paletten und unterschiedliche LKW- bzw. Anhängerinnenräume, beispielsweise aufgrund von Beschädigungen und/oder Führungsschienen, nicht kompensiert werden können. Sobald eine Palette nicht wie erwartet auf der Ladefläche verladen werden kann, geht das autonome Flurförderzeug in einen Fehler und ein manuelles Eingreifen ist erforderlich, um die Palette erfolgreich auf der Ladefläche zu platzieren.

Der vorliegenden Erfindung liegt die Aufgabe zugrunde, ein autonomes, bodengebundenes Flurförderzeug und ein Verfahren zum Beladen einer Ladefläche, insbesondere einer Ladefläche eines Lastkraftwagens oder eines LKW-Anhängers oder eines Containers, mit Ladungsträgern mittels eines derartigen autonomen, bodengebundenen Flurförderzeugs zur Verfügung zu stellen, mit dem der Prozess des Beladens einer Ladefläche eines Lastkraftwagens, LKW-Anhängers oder Containers verbessert werden kann.

Diese Aufgabe wird gemäß einem ersten Aspekt gelöst durch ein autonomes, bodengebundenes Flurförderzeug umfassend einen Fahrantrieb und ein Lastaufnahmemittel, das als Lastgabel mit zwei Gabelzinken ausgebildet ist, wobei das Flurförderzeug eine erste Sensoreinrichtung aufweist, die ausgebildet ist, eine Relativbewegung eines auf den Gabelzinken befindlichen Ladungsträgers in Fahrzeugquerrichtung des Flurförderzeugs zu ermitteln, und eine zweite Sensoreinrichtung aufweist, die ausgebildet ist, eine Relativbewegung des auf den Gabelzinken befindlichen Ladungsträgers in Fahrzeuglängsrichtung des Flurförderzeugs zu ermitteln.

Das autonome Flurförderzeug weist eine erste Sensoreinrichtung auf, mit der eine Relativbewegung des auf den Gabelzinken befindlichen Ladungsträgers in Fahrzeugquerrichtung des Flurförderzeugs ermittelt werden kann, und eine zweite Sensoreinrichtung auf, mit der eine Relativbewegung des auf den Gabelzinken befindlichen Ladungsträgers in Fahrzeuglängsrichtung des Flurförderzeugs ermittelt werden kann.

Mit den Sensoreinrichtungen wird es ermöglicht, dass beim Absetzen eines Ladungsträgers auf der Ladefläche der Ladungsträger in Anlage und in Kontakt mit einer Ladewand der Ladefläche bzw. in Anlage und in Kontakt mit bereits auf der Ladefläche abgesetzten Ladungsträger abgesetzt werden kann. Hierdurch kann eine hohe Genauigkeit der Platzierung der Ladungsträger auf der Ladefläche erzielt werden und der Prozess des Beladens einer Ladefläche eines Lastkraftwagens, LKW-Anhängers oder Containers mit einem autonomen Flurförderzeug stabil und mit einer hohen Prozess-Robustheit durchgeführt werden.

Durch das Platzieren der Ladungsträger relativ und auf Kontakt zu einer Ladewand der Ladefläche bzw. in Anlage und in Kontakt mit einem bereits auf der Ladefläche abgesetzten Ladungsträger können potentielle Fehler durch ungenaue Navigation bzw. Lokalisierung des autonomen Flurförderzeugs, unerwartet verschobene Paletten, verrutschte Ladungen auf den Paletten und unterschiedliche LKW- bzw. Anhängerinnenräume, beispielsweise aufgrund von Beschädigungen und/oder Führungsschienen, kompensiert werden und die Ladungsträger prozess-sicher und ohne manuelles Eingreifen auf der Ladefläche abgestellt werden.

Mit dem erfindungsgemäßen autonomen Flurförderzeug wird es ermöglicht, dass die Ladungsträger dicht an die Seitenwände der Ladefläche und/oder dicht an bereits auf der Ladefläche abgestellte Ladungsträger platziert werden können, so dass für die nachfolgenden Ladungsträger noch der maximale Platz zur Verfügung steht, wodurch sichergestellt werden kann, dass die Ladefläche mit allen gewünschten Ladungsträgern beladen werden kann.

Gemäß einer vorteilhaften Ausgestaltungsform der Erfindung steht die erste Sensoreinrichtung mit einer Datenverarbeitungseinrichtung des Flurförderzeugs zur Auswertung der Sensordaten der ersten Sensoreinrichtung in Verbindung, wobei die Datenverarbeitungseinrichtung ausgebildet ist, aus den Sensordaten der ersten Sensoreinrichtung eine Bewegung des auf den Gabelzinken befindlichen Ladungsträgers relativ zu den Gabelzinken in Fahrzeugquerrichtung zu erkennen. Beim Absetzen eines Ladungsträgers auf der Ladefläche kann hierdurch in einfacher und sicherer Weise erkannt werden, wenn der abzusetzende Ladungsträger seitlich in Kontakt mit der seitlichen Ladewand der Ladefläche oder seitlich in Kontakt mit einer bereits auf der Ladefläche abgesetzten Ladungsträgers ist.

Gemäß einer vorteilhaften Ausgestaltungsform der Erfindung steht die zweite Sensoreinrichtung mit der Datenverarbeitungseinrichtung des Flurförderzeugs zur Auswertung der Sensordaten der zweiten Sensoreinrichtung in Verbindung, wobei die Datenverarbeitungseinrichtung ausgebildet ist, aus den Sensordaten der zweiten Sensoreinrichtung eine Bewegung des auf den Gabelzinken befindlichen Ladungsträgers relativ zu den Gabelzinken in Fahrzeuglängsrichtung in Richtung eines Gabelrückens der Gabelzinken zu erkennen. Beim Absetzen eines Ladungsträgers auf der Ladefläche kann hierdurch in einfacher und sicherer Weise erkannt werden, wenn der abzusetzende Ladungsträger an seiner Vorderseite in Kontakt mit der vorderen Ladewand der Ladefläche oder an seiner Vorderseite in Kontakt mit einer bereits auf der Ladefläche abgesetzten Ladungsträgers ist.

Gemäß einer vorteilhaften Ausgestaltungsform der Erfindung umfasst das Flurförderzeug einen Fahrantrieb, der ausgebildet ist, das Flurförderzeug in Fahrzeuglängsrichtung zu verfahren, wobei die Datenverarbeitungseinrichtung ausgebildet ist, den Fahrantrieb bei Erkennen einer Bewegung des auf den Gabelzinken befindlichen Ladungsträgers relativ zu den Gabelzinken in Fahrzeuglängsrichtung in Richtung des Gabelrückens der Gabelzinken zu stoppen. Hierdurch wird in prozess-sicherer Weise erzielt, dass der abzusetzende, auf den Gabelzinken befindliche Ladungsträger an seiner Vorderseite in Kontakt mit der vorderen Ladewand der Ladefläche oder an seiner Vorderseite in Kontakt mit einer bereits auf der Ladefläche abgesetzten Ladungsträgers gelangt.

Gemäß einer vorteilhaften Ausgestaltungsform der Erfindung ist der Fahrantrieb ausgebildet, das Flurförderzeug in Fahrzeugquerrichtung zu verfahren, wobei die Datenverarbeitungseinrichtung ausgebildet ist, den Fahrantrieb bei Erkennen einer Bewegung des auf den Gabelzinken befindlichen Ladungsträgers relativ zu den Gabelzinken in Fahrzeugquerrichtung zu stoppen. Die Bewegung des Flurförderzeugs und somit der Gabelzinken in Fahrzeugquerrichtung kann mit dem Fahrantrieb durchgeführt werden. Sofern der Fahrantrieb und somit die Bewegung der Gabelzinken in Fahrzeugquerrichtung gestoppt wird, wenn eine Bewegung des auf den Gabelzinken befindlichen Ladungsträgers relativ zu den Gabelzinken in Fahrzeugquerrichtung ermittelt wird, wird in prozess-sicherer Weise erzielt, dass der abzusetzende, auf den Gabelzinken befindliche Ladungsträger seitlich in Kontakt mit der seitlichen Ladewand der Ladefläche oder seitlich in Kontakt mit einem bereits auf der Ladefläche abgesetzten Ladungsträgers gelangt.

Gemäß einer vorteilhaften Ausgestaltungsform der Erfindung umfasst das Flurförderzeug eine Seitenschiebereinrichtung umfasst, die ausgebildet ist, das Lastaufnahmemittel in Fahrzeugquerrichtung zu verfahren, wobei die Datenverarbeitungseinrichtung ausgebildet ist, die Seitenschiebereinrichtung bei Erkennen einer Bewegung des auf den Gabelzinken befindlichen Ladungsträgers relativ zu den Gabelzinken in Fahrzeugquerrichtung zu stoppen. Die Bewegung der Gabelzinken in Fahrzeugquerrichtung kann mit der Seitenschiebereinrichtung durchgeführt werden. Mit der Seitenschiebereinrichtung kann die Kontur des auf den Gabelzinken befindlichen Ladungsträgers aus der Kontur des Flurförderzeugs seitlich, d.h. in Fahrzeugquerrichtung, hinausgeschoben werden. Sofern die Seitenschiebereinrichtung und somit die Bewegung der Gabelzinken in Fahrzeugquerrichtung gestoppt wird, wenn eine Bewegung des auf den Gabelzinken befindlichen Ladungsträgers relativ zu den Gabelzinken in Fahrzeugquerrichtung ermittelt wird, wird in prozess-sicherer Weise erzielt, dass der abzusetzende, auf den Gabelzinken befindliche Ladungsträger seitlich in Kontakt mit der seitlichen Ladewand der Ladefläche oder seitlich in Kontakt mit einem bereits auf der Ladefläche abgesetzten Ladungsträgers gelangt.

Gemäß einer vorteilhaften Ausgestaltungsform der Erfindung weist die erste Sensoreinrichtung und/oder die zweite Sensoreinrichtung mindestens einen Abstandssensor in mindestens einer Gabelzinke auf, der ausgebildet ist, eine auf den Gabelzinken aufgenommene Transportpalette als Ladungsträger zu erfassen. Die Abstandssensoren sind bevorzugt in einem Gabelblatt der Gabelzinke angeordnet, das in den zu transportierenden Ladungsträger eingeschoben wird, und erfassen den Abstand zu Transportfüßen der aufgenommenen Transportpalette. Mit derartigen Abstandssensoren kann eine Bewegung der auf den Gabelzinken befindlichen Transportpalette relativ zu den Gabelzinken in Fahrzeugquerrichtung und/oder eine Bewegung der auf den Gabelzinken befindlichen Transportpalette relativ zu den Gabelzinken in Fahrzeuglängsrichtung in einfacher und sicherer Weise ermittelt werden.

Gemäß einer vorteilhaften Ausgestaltungsform der Erfindung weist die erste Sensoreinrichtung und/oder die zweite Sensoreinrichtung mindestens eine Kamera auf. Mit einer auf die Gabelzinken orientierten Kamera kann eine Bewegung der auf den Gabelzinken befindlichen Transportpalette relativ zu den Gabelzinken in Fahrzeugquerrichtung und/oder eine Bewegung der auf den Gabelzinken befindlichen Transportpalette relativ zu den Gabelzinken in Fahrzeuglängsrichtung in einfacher und sicherer Weise ermittelt werden.

Gemäß einer vorteilhaften Ausgestaltungsform der Erfindung weist die erste Sensoreinrichtung und/oder die zweite Sensoreinrichtung einen Stromsensor und/oder einen Drehmomentsensor aufweist, der ausgebildet, den elektrischen Strom und/oder das Drehmoment eines elektrischen Fahrmotors des Fahrantriebs zu ermitteln. Wenn der auf den Gabelzinken angeordnete Ladungsträger in Kontakt mit einer Ladewand der Ladefläche oder einem bereits auf der Ladeflache abgestellten Ladungsträger gelangt und die Bewegung in Fahrzeugquerrichtung und/oder in Fahrzeuglängsrichtung weiter durchgeführt wird, rutscht der Ladungsträger auf den Gabelzinken und der elektrische Strom und/oder das Drehmoment des elektrischen Fahrmotors des Fahrantriebs steigt an. Mit einem Stromsensor und/oder einen Drehmomentsensor des elektrischen Fahrmotors des Fahrantriebs kann somit eine Bewegung der auf den Gabelzinken befindlichen Transportpalette relativ zu den Gabelzinken in Fahrzeugquerrichtung und/oder eine Bewegung der auf den Gabelzinken befindlichen Transportpalette relativ zu den Gabelzinken in Fahrzeuglängsrichtung in einfacher und sicherer Weise ermittelt werden.

Gemäß einer vorteilhaften Ausgestaltungsform der Erfindung weist die erste Sensoreinrichtung einen Stromsensor und/oder einen Drehmomentsensor auf, der ausgebildet, den elektrischen Strom und/oder das Drehmoment eines elektrischen Antriebsmotors der Seitenschiebereinrichtung zu ermitteln. Wenn der auf den Gabelzinken angeordnete Ladungsträger in Kontakt mit einer seitlichen Ladewand der Ladefläche oder einem bereits auf der Ladeflache abgestellten Ladungsträger gelangt und die Bewegung in Fahrzeugquerrichtung von der Seitenschiebereinrichtung weiter durchgeführt wird, rutscht der Ladungsträger auf den Gabelzinken und der elektrische Strom und/oder das Drehmoment des elektrischen Antriebsmotors der Seitenschiebereinrichtung steigt an. Mit einem Stromsensor und/oder einen Drehmomentsensor des elektrischen Antriebsmotors der Seitenschiebereinrichtung kann somit eine Bewegung der auf den Gabelzinken befindlichen Transportpalette relativ zu den Gabelzinken in Fahrzeugquerrichtung in einfacher und sicherer Weise ermittelt werden.

Gemäß einer vorteilhaften Ausgestaltungsform der Erfindung weist die zweite Sensoreinrichtung eine Lastklappe auf, die ausgebildet ist, das Anliegen des Ladungsträgers oder einer auf dem Ladungsträger angeordneten Last an dem Gabelrücken oder einem Gabelträger zu erfassen, wobei an dem Gabelträger die Gabelzinken mit den Gabelrücken angeordnet sind. Mit einer derartigen Lastklappe kann die Bewegung des auf den Gabelzinken befindlichen Ladungsträgers relativ zu den Gabelzinken in Fahrzeuglängsrichtung in Richtung des Gabelrückens der Gabelzinken in einfacher und sicherer Weise ermittelt werden.

Gemäß einer vorteilhaften Ausgestaltungsform der Erfindung weist das Flurförderzeug einen Hubmast auf, an dem das Lastaufnahmemittel mittels eines Hubantriebs anhebbar und absenkbar ist. Der Ladungsträger kann hierdurch von dem autonomen Flurförderzeug in einfacher Weise durch Anheben vom Boden aufgenommen und durch Absenken auf die Ladefläche abgesetzt werden.

Gemäß einer vorteilhaften Ausgestaltungsform der Erfindung ist der Hubmast mittels eines Neigeantriebs um eine Neigeachse neigbar. Sofern die Ladefläche über eine Rampe beladen wird, auf der das Flurförderzeug in die Ladefläche fährt, können mit einem nach vorne bzw. nach hinten neigbaren Hubmast Vorteile beim Absetzen der Ladungsträger auf der Ladefläche erzielt werden.

Gemäß einer vorteilhaften Ausgestaltungsform der Erfindung weist das Flurförderzeug eine Umfeldsensorik auf, insbesondere einen 2D-Lasersensor oder einen 3D-Lasersensor. Mit einer derartigen Umfeldsensorik, beispielsweise einem als Laserscanner ausgebildeten 2D-Lasersensor oder einen 3D-Lasersensor, kann sich das autonome Flurförderzeug in einfacher Weise auf der Ladefläche des Lastkraftwagens, des LKW-Anhängers oder des Containers lokalisieren.

Die oben genannte Aufgabe wird gemäß einem zweiten Aspekt gelöst durch ein Verfahren zum Beladen einer Ladefläche, insbesondere einer Ladefläche eines Lastkraftwagens einer eines LKW-Anhängers oder eines Containers, mit Ladungsträgern mittels eines autonomen, bodengebundenen Flurförderzeugs nach dem ersten Aspekt, wobei beim Beladen der Ladefläche mit einem Ladungsträger in einem ersten Schritt das Flurförderzeug mit dem auf den Gabelzinken befindlichen Ladungsträger an eine Vorposition auf der Ladefläche verfahren wird, insbesondere mittels des Fahrantriebs, in einem anschließenden zweiten Schritt eine Bewegung der Gabelzinken in Fahrzeugquerrichtung durchgeführt wird, insbesondere mittels des Fahrantriebs oder einer Seitenschiebereinrichtung, wobei bei Erkennen einer Bewegung des auf den Gabelzinken befindlichen Ladungsträgers relativ zu den Gabelzinken in Fahrzeugquerrichtung die Bewegung der Gabelzinken in Fahrzeugquerrichtung gestoppt wird, in einem anschließenden dritten Schritt eine Vorwärtsfahrbewegung des Flurförderzeugs durchgeführt wird, insbesondere mittels des Fahrantriebs, wobei bei Erkennen einer Bewegung des auf den Gabelzinken befindlichen Ladungsträgers relativ zu den Gabelzinken in Fahrzeuglängsrichtung in Richtung eines Gabelrückens der Gabelzinken die Vorwärtsfahrbewegung des Flurförderzeugs gestoppt wird, in einem anschließenden vierten Schritt der Ladungsträger auf die Ladefläche abgesenkt wird, und in einem anschließenden fünften Schritt eine Rückwärtsfahrbewegung des Flurförderzeugs durchgeführt wird, insbesondere mittels des Fahrantriebs, mit der die Gabelzinken aus dem abgesetzten Ladungsträger herausgefahren werden.

**In** dem zweiten Schritt wird eine Bewegung der Gabelzinken in Fahrzeugquerrichtung durchgeführt, beispielsweise mittels des Fahrantriebs oder der Seitenschiebereinrichtung, und bei Erkennen einer Bewegung des auf den Gabelzinken befindlichen Ladungsträgers relativ zu den Gabelzinken in Fahrzeugquerrichtung die Bewegung der Gabelzinken in Fahrzeugquerrichtung gestoppt. Die Bewegung des auf den Gabelzinken befindlichen Ladungsträgers relativ zu den Gabelzinken in Fahrzeugquerrichtung wird mittels der ersten Sensoreinrichtung ermittelt und erkannt. In dem zweiten Schritt wird somit ein sogenanntes "Sideshift-Servoing" durchgeführt, bei der eine Bewegung der Gabelzinken in Fahrzeugquerrichtung durchgeführt wird bis sich der auf den Gabelzinken befindliche, abzusetzende Ladungsträger relativ zu den Gabelzinken in Fahrzeugquerrichtung bewegt. Sobald sich der auf den Gabelzinken befindliche, abzusetzende Ladungsträger relativ zu den Gabelzinken in Fahrzeugquerrichtung bewegt, wird die Bewegung der Gabelzinken in Fahrzeugquerrichtung gestoppt. Hierdurch wird erzielt, dass der auf den Gabelzinken befindliche, abzusetzende Ladungsträger seitlich auf Kontakt mit einer seitlichen Ladewand der Ladefläche oder seitlich auf Kontakt mit einer bereits auf der Ladefläche abgesetzten Ladungsträger ist.

**In** dem anschließenden dritten Schritt wird eine Vorwärtsfahrbewegung des Flurförderzeugs durchgeführt, beispielsweise mittels des Fahrantriebs, und bei Erkennen einer Bewegung des auf den Gabelzinken befindlichen Ladungsträgers relativ zu den Gabelzinken in Fahrzeuglängsrichtung in Richtung eines Gabelrückens der Gabelzinken die Vorwärtsfahrbewegung des Flurförderzeugs gestoppt. Die Bewegung des auf den Gabelzinken befindlichen Ladungsträgers relativ zu den Gabelzinken in Fahrzeuglängsrichtung in Richtung des Gabelrückens der Gabelzinken wird mittels der zweiten Sensoreinrichtung ermittelt und erkannt. In dem dritten Schritt wird somit ein sogenanntes "Forward-Servoing" durchgeführt, bei der eine Bewegung des Flurförderzeugs und somit der Gabelzinken in Vorwärtsfahrtrichtung durchgeführt wird bis sich der auf den Gabelzinken befindliche, abzusetzende Ladungsträger relativ zu den Gabelzinken in Fahrzeuglängsrichtung in Richtung des Gabelrückens der Gabelzinken bewegt. Sobald sich der auf den Gabelzinken befindliche, abzusetzende Ladungsträger relativ zu den Gabelzinken in Fahrzeuglängsrichtung in Richtung des Gabelrückens der Gabelzinken bewegt, wird die Vorwärtsfahrbewegung des Flurförderzeugs gestoppt. Hierdurch wird erzielt, dass der auf den Gabelzinken befindliche, abzusetzende Ladungsträger an seiner Vorderseite auf Kontakt mit der vorderen Ladewand der Ladefläche oder an seiner Vorderseite auf Kontakt mit einer bereits auf der Ladefläche abgesetzten Ladungsträgers ist.

**In** dem vierten Schritt wird der auf den Gabelzinken befindliche Ladungsträger auf die Ladefläche abgesenkt. Mit dem "Sideshift-Servoing" und dem "Forward-Servoing" wird hierbei erzielt, dass der Ladungsträger auf Kontakt und somit in Anlage, d.h. anliegend, zu einer Ladewand der Ladefläche bzw. auf Kontakt und somit in Anlage zu einem bereits auf der Ladefläche abgestellten Ladungsträger auf der Ladefläche abgestellt wird.

Gemäß einer vorteilhaften Ausgestaltungsform der Erfindung wird die Ladefläche reihenweise mit Ladungsträgern beladen, wobei pro Ladereihe ein erster, äußerer Ladungsträger anliegend an eine erste seitliche Ladewand auf der Ladefläche abgesetzt wird, anschließend ein zweiter, mittlerer Ladungsträger anliegend an den ersten Ladungsträger auf der Ladefläche abgesetzt wird, und anschließend ein dritter, äußerer Ladungsträger anliegend an eine zweite seitliche Ladewand auf der Ladefläche abgesetzt wird. Hierdurch kann ein prozess-sicherer Beladevorgang der Ladefläche mit den Ladungsträgern mittels des autonomen Flurförderzeugs erzielt werden.

Gemäß einer vorteilhaften Ausgestaltungsform der Erfindung wird in einer Abschlußreihe ein erster, äußerer Ladungsträger anliegend an eine erste seitliche Ladewand auf der Ladefläche abgesetzt, anschließend ein zweiter, äußerer Ladungsträger anliegend an eine zweite seitliche Ladewand auf der Ladefläche abgesetzt, und anschließend ein dritter, mittlerer Ladungsträger zwischen dem ersten Ladungsträger und dem zweiten Ladungsträger auf der Ladefläche abgesetzt. In der letzten Ladereihe der Ladungsträger (Abschlussreihe) kann mit dieser Verladereihenfolge der Ladungsträger auch bei Vorhandensein von Rolltorschienen ein Verladen von drei nebeneinanderstehenden Ladungsträgern in der Abschlussreihe erzielt werden.

Die Erfindung bietet eine Reihe von Vorteilen.

Mit dem "Sideshift-Servoing" wird ein Platzieren jedes Ladungsträgers auf Kontakt zur seitlich liegenden Ladewand der Ladefläche oder auf Kontakt zu einem bereits auf der Ladefläche abgestellten Ladungsträger erzielt. Hierdurch wird der zur Verfügung stehenden Platz in einer Ladereihe maximiert, um weitere Ladungsträger in der Ladereihe zu platzieren.

Durch den Kontakt zu umliegenden Ladungsträgern und Ladewänden wird der abzusetzende Ladungsträger ausgerichtet und gerade zu den bereits auf der Ladefläche abgestellten Ladungsträgern abgelegt.

Durch das Ausrichten des dritten Ladungsträgers jeder Ladereihe an der zweiten seitliche Ladewand der Ladefläche wird erzielt, dass der dritte Ladungsträger mit hoher Wahrscheinlichkeit geradlinig in die zur Verfügung stehende Lücke zwischen dem zweiten Ladungsträger und der zweiten seitliche Ladewand der Ladefläche eingeführt werden kann.

Mit dem "Forward-Servoing" wird ein Absetzten des Ladungsträgers auf Kontakt mit der vorderen Ladewand der Ladefläche oder auf Kontakt mit einem bereits abgestellten Ladungsträger der vorderen Ladereihe erzielt. Hierdurch wird der Platz in Richtung zu einer hinteren Ladewand, über die das Beladen der Ladefläche erfolgt, maximiert, sodass alle geplanten Ladereihen in die Ladefläche geladen werden können.

In der Abschlussreihe wird durch das Laden der beiden äußeren Ladungsträger zuerst sowie das Ausrichten der beiden äußeren Ladungsträger an der ersten bzw. zweiten seitlichen Ladewand und den Ladungsträgern der vorletzten Ladereihe erzielt, dass die Abschlussreihe hinter Rolltorschienen von Verladerampen platziert werden kann und in der Abschlussreihe drei nebeneinander stehende Ladungsträger verladen werden können.

Das erfindungsgemäße autonome Flurförderzeug kann mit weniger manueller Hilfe seine Ladearbeit ausführen, da weniger Ladungsträger korrigiert werden müssen und das autonome Flurförderzeug immer auf die aktuelle Situation der bereits auf der Ladefläche abgestellten Ladungsträger reagiert.

Weitere Vorteile und Einzelheiten der Erfindung werden beispielhaft anhand des in den schematischen Figuren dargestellten Ausführungsbeispiels näher erläutert. Hierbei zeigt
- Figur 1: ein erfindungsgemäßes Flurförderzeug in einer Draufsicht,
- Figur 2: ein mit dem erfindungsgemäßen Flurförderzeug und erfindungsgemäßen Verfahren beladene Ladefläche in einer Draufsicht,
- Figur 3: mehrere Darstellungen zur Verdeutlichung des Ladevorgangs eines ersten Ladungsträgers einer Ladereihe,
- Figur 4: mehrere Darstellungen zur Verdeutlichung des Ladevorgangs eines zweiten Ladungsträgers einer Ladereihe,
- Figur 5: mehrere Darstellungen zur Verdeutlichung des Ladevorgangs eines dritten Ladungsträgers einer Ladereihe,
- Figur 6: mehrere Darstellungen zur Verdeutlichung des Ladevorgangs eines ersten Ladungsträgers einer Abschlussreihe,
- Figur 7: mehrere Darstellungen zur Verdeutlichung des Ladevorgangs eines zweiten Ladungsträgers der Abschlussreihe und
- Figur 8: mehrere Darstellungen zur Verdeutlichung des Ladevorgangs eines dritten Ladungsträgers der Abschlussreihe.

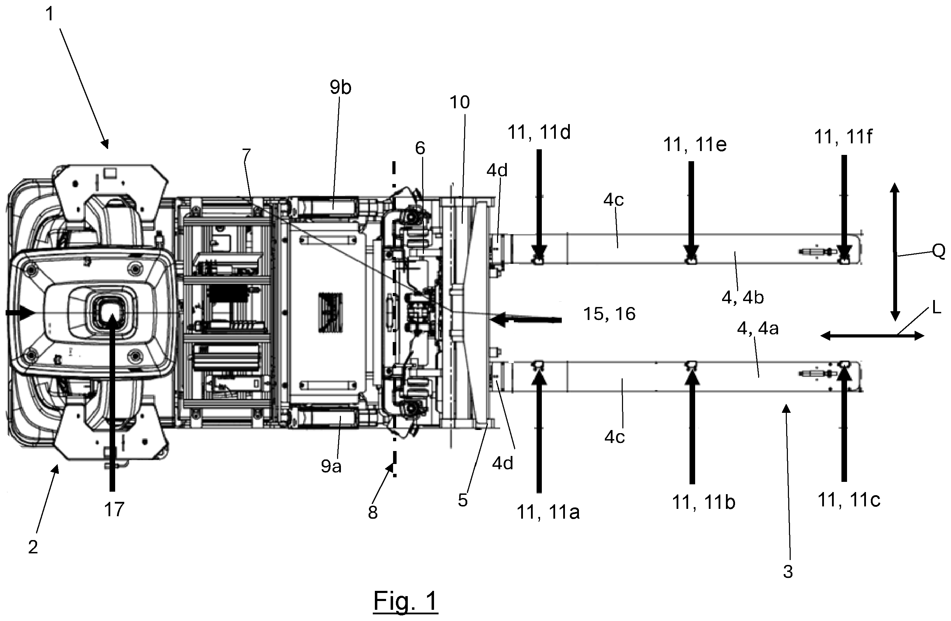

In der Figur 1 ist erfindungsgemäßes autonomes, bodengebundenes Flurförderzeug 1 in einer Draufsicht dargestellt.

Das Flurförderzeug 1 umfasst einen Antriebsteil 2 und einen Lastteil 3.

Im Antriebsteil 2 ist ein nicht näher dargestellter Fahrantrieb mit einem lenkbaren und von einem elektrischen Fahrmotor angetriebenen Antriebsrad angeordnet.

Das Lastteil 3 umfasst ein Lastaufnahmemittel 4, das als Lastgabel mit zwei Gabelzinken 4a, 4b ausgebildet ist. Die Gabelzinken 4a, 4b erstrecken sich in Fahrzeuglängsrichtung L und sind in Fahrzeugquerrichtung Q voneinander beabstandet angeordnet.

Die Gabelzinken 4a, 4b umfassen jeweils ein waagerechtes Gabelblatt 4c und einen senkrechten Gabelrücken 4d. Die Gabelzinken 4a, 4b sind mit dem Gabelrücken 4d an einem Gabelträger 5 befestigt, der an einem Hubmast 6 mittels eines Hubantriebs 7 anhebbar und absenkbar angeordnet ist.

Der Hubmast 6 ist im dargestellten Ausführungsbeispiel um eine horizontale Neigeachse 8, die sich in Fahrzeugquerrichtung Q erstreckt, mittels eines Neigeantriebs 9a, 9b neigbar.

Das Flurförderzeug 1 weist eine Seitenschiebereinrichtung 10 auf, mit der das Lastaufnahmemittel 4 in Fahrzeugquerrichtung Q verfahren werden kann. Im dargestellten Ausführungsbeispiel verschiebt die Seitenschiebereinrichtung 10 den Gabelträger 5 in Fahrzeugquerrichtung Q. Mit der Seitenschiebereinrichtung 10 kann die Außenkante eines auf den Gabelzinken 4a, 4b befindlichen Ladungsträgers, beispielsweise einer als Euro-Palette ausgebildete Transportpalette, über die Kontur des Flurförderzeugs 1 seitlich ausgeschoben werden.

Das Flurförderzeug 1 weist eine erste Sensoreinrichtung 11 auf, die ausgebildet ist, eine Relativbewegung eines auf den Gabelzinken 4a, 4b befindlichen Ladungsträgers in Fahrzeugquerrichtung Q des Flurförderzeugs 1 zu ermitteln.

Im dargestellten Ausführungsbeispiel umfasst die erste Sensoreinrichtung 11 drei Abstandssensoren 11a, 11b, 11c, die im Gabelblatt 4c der Gabelzinke 4a angeordnet sind, und drei Abstandssensoren 11d, 11e, 11f, die im Gabelblatt 4c der Gabelzinke 4b angeordnet sind. Die Abstandssensoren 11a-11f weisen jeweils einen in Fahrzeugquerrichtung Q orientierte Erfassungsbereich auf und sind in dem Gabelblatt 4c der entsprechenden Gabelzinke 4a, 4b derart angeordnet, dass die Abstandssensoren 11a-11f die Transportfüße eines auf den Gabelzinken 4a, 4b ausgenommenen, als Transportpalette, beispielsweise Euro-Palette, ausgebildeten Ladungsträgers und somit die Position des auf den Gabelzinken 4a, 4b befindlichen Ladungsträgers ermitteln.

Das Flurförderzeug 1 weist eine zweite Sensoreinrichtung 15 auf, die ausgebildet ist, eine Relativbewegung des auf den Gabelzinken 4a, 4b befindlichen Ladungsträgers in Fahrzeuglängsrichtung L in Richtung des Gabelrückens 4d der Gabelzinken 4a, 4b zu ermitteln.

Die zweite Sensoreinrichtung 15 ist im dargestellten Ausführungsbeispiel als Lastklappe 16 ausgebildet, die das Anliegen des Ladungsträgers oder einer auf dem Ladungsträger angeordneten Last an dem Gabelrücken 4d oder dem Gabelträger 5 erfasst. Die zweite Sensoreinrichtung 15 gibt somit eine Rückmeldung, ob der auf den Gabelzinken 4a, 4b befindliche Ladungsträger bzw. die darauf befindliche Last am Gabelträger 5 oder am Gabelrücken 4d anliegt.

Das Flurförderzeug 1 ist weiterhin mit einer Umfeldsensorik 17 versehen, beispielsweise einem 2D-Laserscanner, der zur Lokalisierung des autonomen Flurförderzeugs 1 in der Umgebung dient.

Die erste Sensoreinrichtung 11 steht mit einer nicht näher dargestellten Datenverarbeitungseinrichtung des Flurförderzeugs 1 zur Auswertung der Sensordaten der ersten Sensoreinrichtung 11 in Verbindung. Die Datenverarbeitungseinrichtung ist ausgebildet, aus den Sensordaten der ersten Sensoreinrichtung 11 eine Bewegung des auf den Gabelzinken 4a, 4b befindlichen Ladungsträgers relativ zu den Gabelzinken 4a, 4b in Fahrzeugquerrichtung Q zu erkennen.

Die zweite Sensoreinrichtung 15 steht mit der Datenverarbeitungseinrichtung des Flurförderzeugs 1 zur Auswertung der Sensordaten der zweiten Sensoreinrichtung 15 in Verbindung. Die Datenverarbeitungseinrichtung ist ausgebildet, aus den Sensordaten der zweiten Sensoreinrichtung 15 eine Bewegung des auf den Gabelzinken 4a, 4b befindlichen Ladungsträgers relativ zu den Gabelzinken 4b, 4b in Fahrzeuglängsrichtung L in Richtung des Gabelrückens 4d der Gabelzinken 4a, 4b zu erkennen.

Bei dem erfindungsgemäßen Flurförderzeug 1 ist der Fahrantrieb vorgesehen, das Flurförderzeug 1 in Fahrzeuglängsrichtung L zu verfahren. Die Datenverarbeitungseinrichtung ist ausgebildet, den Fahrantrieb zu stoppen, wenn mittels der zweiten Sensoreinrichtung 15 eine Bewegung des auf den Gabelzinken 4a, 4b befindlichen Ladungsträgers relativ zu den Gabelzinken 4a, 4b in Fahrzeuglängsrichtung L in Richtung des Gabelrückens 4d der Gabelzinken 4a, 4b erkannt wird.

Bei dem erfindungsgemäßen Flurförderzeug 1 ist die Seitenschiebereinrichtung 10 vorgesehen, das Lastaufnahmemittel 4 in Fahrzeugquerrichtung Q zu verfahren. Die Datenverarbeitungseinrichtung ist ausgebildet, die Seitenschiebereinrichtung 10 zu stoppen, wenn mittels der ersten Sensoreinrichtung 11 eine Bewegung des auf den Gabelzinken 4a, 4b befindlichen Ladungsträgers relativ zu den Gabelzinken 4a, 4b in Fahrzeugquerrichtung Q erkannt wird.

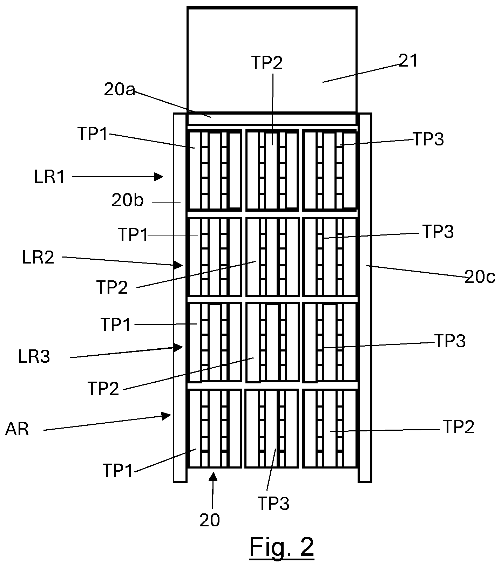

Im Folgenden wird anhand der Figuren 2 bis 8 ein Verfahren zum Beladen einer Ladefläche, beispielsweise einer Ladefläche eines Lastkraftwagens oder eines LKW-Anhängers, mit als Transportpaletten ausgebildeten Ladungsträgern mittels des autonomen, bodengebundenen Flurförderzeugs 1 der Figur 1 beschrieben.

In der Figur 2 ist eine vollständig beladene Ladefläche 20 eines Lastkraftwagens 21 oder eines LKW-Anhängers in einer Draufsicht dargestellt.

Die Ladefläche 20 ist nach vorne von einer vorderen Ladewand 20a, nach links von einer ersten, seitlichen Ladewand 20b, nach rechts von einer zweiten seitlichen Ladewand 20c und nach hinten von einer hinteren Ladewand begrenzt. Der Beladevorgang der Ladefläche 20 erfolgt über die geöffnete hintere Ladewand.

Die Ladefläche 20 ist mit mehreren Ladereihen LR1, LR2, LR3 und einer hinteren Abschlussreihe AR beladen, wobei jede Ladereihe LR1, LR2, LR3 sowie die Abschlussreihe AR jeweils drei, als Transportpaletten TP1, TP2, TP3 ausgebildete Ladungsträger umfassen, die jeweils mit der Schmalseite voran verladen werden.

Beim Beladen der Ladefläche 20 mit einem Ladungsträger wird in einem ersten Schritt das Flurförderzeug 1 mit dem auf den Gabelzinken 4a, 4b befindlichen Ladungsträger an eine Vorposition auf der Ladefläche 20 verfahren, beispielsweise mittels des Fahrantriebs. In einem anschließenden zweiten Schritt wird ein "Sideshift-Servoing" durchgeführt, wobei eine Bewegung der Gabelzinken 4a, 4b in Fahrzeugquerrichtung Q durchgeführt wird, beispielsweise mittels der Seitenschiebereinrichtung 10, und bei Erkennen einer Bewegung des auf den Gabelzinken 4a, 4b befindlichen Ladungsträgers relativ zu den Gabelzinken 4a, 4b in Fahrzeugquerrichtung Q, was mittels der ersten Sensoreinrichtung 11 erfasst werden kann, die Bewegung der Gabelzinken 4a, 4b in Fahrzeugquerrichtung Q gestoppt wird. In einem anschließenden dritten Schritt wird ein "Forward-Servoing" durchgeführt, wobei eine Vorwärtsfahrbewegung des Flurförderzeugs 1 durchgeführt wird, beispielsweise mittels des Fahrantriebs, und bei Erkennen einer Bewegung des auf den Gabelzinken 4a, 4b befindlichen Ladungsträgers relativ zu den Gabelzinken 4a, 4b in Fahrzeuglängsrichtung L in Richtung des Gabelrückens 4d der Gabelzinken 4a, 4b, was mittels der zweiten Sensoreinrichtung 15 erfasst werden kann, die Vorwärtsfahrbewegung des Flurförderzeugs 1 gestoppt wird. In einem anschließenden vierten Schritt wird der Ladungsträger auf die Ladefläche 20 abgesenkt. In einem anschließenden fünften Schritt wird eine Rückwärtsfahrbewegung des Flurförderzeugs 1 durchgeführt, beispielsweise mittels des Fahrantriebs, mit der die Gabelzinken 4a, 4b aus dem auf der Ladefläche 20 abgesetzten Ladungsträger herausgefahren werden.

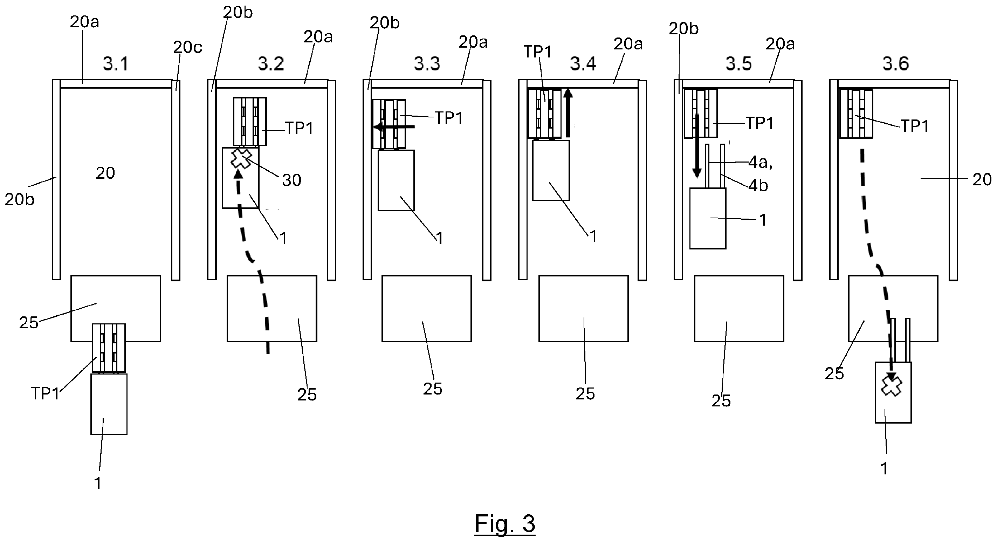

Anhand der Figuren 3 bis 8 wird im Folgenden das Beladen der Ladefläche 20 beschrieben, wobei die Ladefläche 20 reihenweise mit Ladungsträgern beladen wird und pro Ladereihe LR1, LR2, LR3 jeweils ein erster, äußerer Ladungsträger TP1 anliegend an die erste seitliche Ladewand 20b auf der Ladefläche 20 abgesetzt wird, anschließend ein zweiter, mittlerer Ladungsträger TP2 anliegend an den ersten Ladungsträger TP1 auf der Ladefläche 20 abgesetzt wird, und anschließend ein dritter, äußerer Ladungsträger TP3 anliegend an die zweite seitliche Ladewand 20c auf der Ladefläche 20 abgesetzt wird.

In den Figuren 3 bis 8 ist weiterhin eine Laderampe 25 dargestellt, über die das autonome Flurförderzeug 1 über die geöffnete hintere Ladewand die Ladefläche 20 befahren kann.

Das autonome Flurförderzeug 1 startet - wie im Bild 3.1 der Figur 3 verdeutlicht ist - nahe der Ladefläche 20 im Bereich der Laderampe 25. Auf den Gabelzinken 4a, 4b ist eine als Transportpalette TP1, beispielsweise Euro-Palette, ausgebildeter Ladungsträger derart aufgenommen, dass sich die Transportpalette TP1 auf den Gabelzinken 4a, 4b in Fahrzeugquerrichtung Q und in Fahrzeuglängsrichtung L in Richtung zum Gabelrücken 4b um einige Zentimeter bewegen kann. Das Flurförderzeug 1 hebt die Gabelzinken 4a, 4b und die auf den Gabelzinken 4a, 4b befindliche Transportpalette TP1 derart an, dass die Transportpalette TP1 nicht auf dem Boden schleift und nicht die Decke der Ladefläche 20 des Lastkraftwagens oder LKW-Anhängers Anhängers berührt.

Wie in Bild 3.2 der Figur 3 dargestellt ist, fährt das autonome Flurförderzeug 1 mithilfe von autonomen Navigationsalgorithmen und Positionscontrollern auf der Ladefläche 20 auf eine Vorposition 30 für die erste Transportpalette TP1 der Ladereihe LR1. Die Vorposition 30 ist links, dicht an der ersten seitliche Ladewand 20b orientiert, so dass ca. 10cm Platz zwischen dem Flurförderzeug 1 und der ersten seitlichen Ladewand 20b sind sowie ca. 10cm Platz zwischen der Vorderseite der aufgenommenen Transportpalette TP1 und der vorderen Ladewand 20a der Ladefläche 20 sind. Die Gabelzinken 4a, 4b werden abgesenkt, so dass die aufgenommene Transportpalette TP1 geringfügig, beispielswese 2cm, über dem Boden gehalten wird.

Anschließend wird - wie in Bild 3.3 der Figur 3 verdeutlicht ist - das "Sideshift-Servoing" durchgeführt. Hierbei werden die Gabelzinken 4a, 4b in Fahrzeugquerrichtung Q mittels der Seitenschiebereinrichtung 10 so lange nach links auf die erste seitliche Ladewand 20b verfahren, bis sich die Transportpalette TP1 auf den Gabelzinken 4a, 4b in Fahrzeugquerrichtung Q bewegt. Diese Bewegung wird mittels der ersten Sensoreinrichtung 11 erkannt. Sobald sich die Transportplatte TP1 relativ zu den Gabelzinken 4a, 4b in Fahrzeugquerrichtung Q bewegt, wird die Seitenschiebereinrichtung 10 gestoppt. Es kann dann davon ausgegangen werden, dass die linke Seite der auf den Gabelzinken 4a, 4b befindlichen Transportpalette TP1 auf Kontakt mit der ersten seitlichen Ladewand 20b der Ladefläche 20 ist.

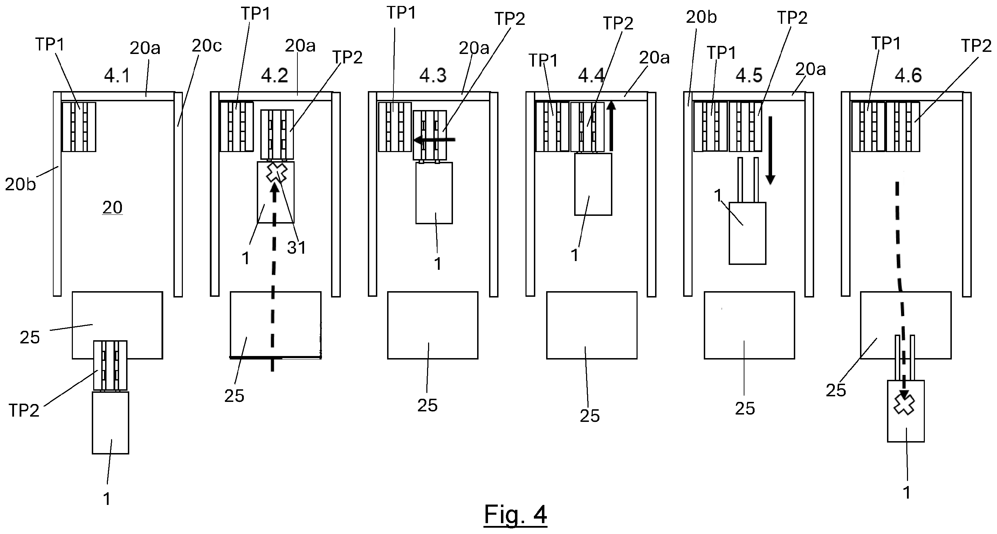

Nach Abschluss des "Sideshift-Servoing" wird - wie in Bild 3.4 der Figur 4 verdeutlicht ist - das "Forward-Servoing" durchgeführt. Hierbei fährt das Flurförderzeug 1 mittels des Fahrantriebs in Vorwärtsfahrtrichtung, d.h. mit dem Lastaufnahmemittel 4 voraus, auf die vordere Ladewand 20a zu, bis sich die auf den Gabelzinken 4a, 4b befindliche Transportpalette TP1 in Fahrzeuglängsrichtung L relativ zu den Gabelzinken 4a, 4b in Richtung auf die Gabelrücken 4d bewegt. Diese Bewegung wird mittels der zweiten Sensoreinrichtung 15 erkannt. Sobald sich die Transportpalette TP1 in Fahrzeuglängsrichtung L relativ zu den Gabelzinken 4a, 4b in Richtung auf die Gabelrücken 4d bewegt, wird der Fahrantrieb gestoppt. Es kann dann davon ausgegangen werden, dass die Vorderseite der auf den Gabelzinken 4a, 4b befindlichen Transportpalette TP1 auf Kontakt mit der vorderen Ladewand 20a der Ladefläche 20 ist.

Anschließend wird durch Absenken der Gabelzinken 4a, 4b die Transportplatte TP1 auf die Ladefläche 20 abgesenkt. Anschließend fährt das autonome Flurförderzeug geradlinig rückwärts aus der abgesetzten Transportpalette TP1 heraus - wie in Bild 3.5 der Figur 3 verdeutlicht ist - und anschließend über geeignete autonome Navigationsalgorithmik aus der Ladefläche 20 heraus, wie in Bild 3.6 der Figur 3 verdeutlicht ist.

Anschließend nimmt das autonome Flurförderzeug 1 eine zweite Transportpalette TP2 mit den Gabelzinken 4a 4b auf, wobei die Transportpalette TP2 ebenfalls derart aufgenommen wird, dass sich die Transportpalette TP2 auf den Gabelzinken 4a, 4b in Fahrzeugquerrichtung Q und in Fahrzeuglängsrichtung L in Richtung zum Gabelrücken 4b um einige Zentimeter bewegen kann, und fährt zurück auf die Laderampe 25, wie in Bild 4.1 der Figur 4 verdeutlicht ist.

Wie in Bild 4.2 der Figur 4 dargestellt ist, fährt das autonome Flurförderzeug 1 mithilfe von autonomen Navigationsalgorithmen und Positionscontrollern auf der Ladefläche 20 auf eine weitere Vorposition 31 für die zweite Transportpalette TP2 der Ladereihe LR1. Für die zweite Transportpalette TP2 liegt die Vorposition 31 in der Mitte der Ladefläche 20, so dass ein Abstand vom Flurförderzeug 1 nach links zur der bereits platzierten ersten Transportpalette TP1 von ca. 10cm gegeben ist und sowie ein Abstand von ca. 10cm zwischen der Vorderseite der aufgenommenen Transportpalette TP2 und der vorderen Ladewand 20a der Ladefläche 20 gegeben ist. Die Gabelzinken 4a, 4b werden abgesenkt, so dass die aufgenommene Transportpalette TP2 geringfügig, beispielsweise 2cm, über dem Boden gehalten wird.

Anschließend wird - wie in Bild 4.3 der Figur 4 dargestellt ist - das "Sideshift-Servoing" durchgeführt, wodurch die linke Seite der auf den Gabelzinken 4a, 4b befindlichen Transportpalette TP2 seitlich nach links auf Kontakt mit der bereits auf der Ladefläche 20 abgesetzten Transportpalette TP1 verschoben wird.

Anschließend wird - wie in Bild 4.4 der Figur 4 dargestellt ist - das "Forward-Servoing" durchgeführt, bis die Vorderseite der auf den Gabelzinken 4a, 4b befindlichen Transportpalette TP2 auf Kontakt mit der vorderen Ladewand 20a der Ladefläche 20 ist.

Anschließend wird durch Absenken der Gabelzinken 4a, 4b die Transportplatte TP2 auf die Ladefläche 20 abgesenkt. Anschließend fährt das autonome Flurförderzeug geradlinig rückwärts aus der abgesetzten Transportpalette TP2 heraus - wie in Bild 4.5 der Figur 4 verdeutlicht ist - und anschließend über geeignete autonome Navigationsalgorithmik aus der Ladefläche 20 heraus, wie in Bild 4.6 der Figur 4 verdeutlicht ist.

Das "Sideshift-Servoing" und das "Forward-Servoing" der zweiten Transportpalette TP2 entspricht dem "Sideshift-Servoing" und dem "Forward-Servoing" der ersten Transportpalette TP1, mit dem Unterschied, dass die zweite Transportpalette TP1 beim "Sideshift-Servoing" links nicht auf Kontakt mit der ersten seitlichen Ladewand 20b der Ladefläche 20 verschoben wird, sondern seitlich nach links auf Kontakt mit der bereits auf der Ladefläche 20 abgesetzten ersten Transportpalette TP1 geschoben wird.

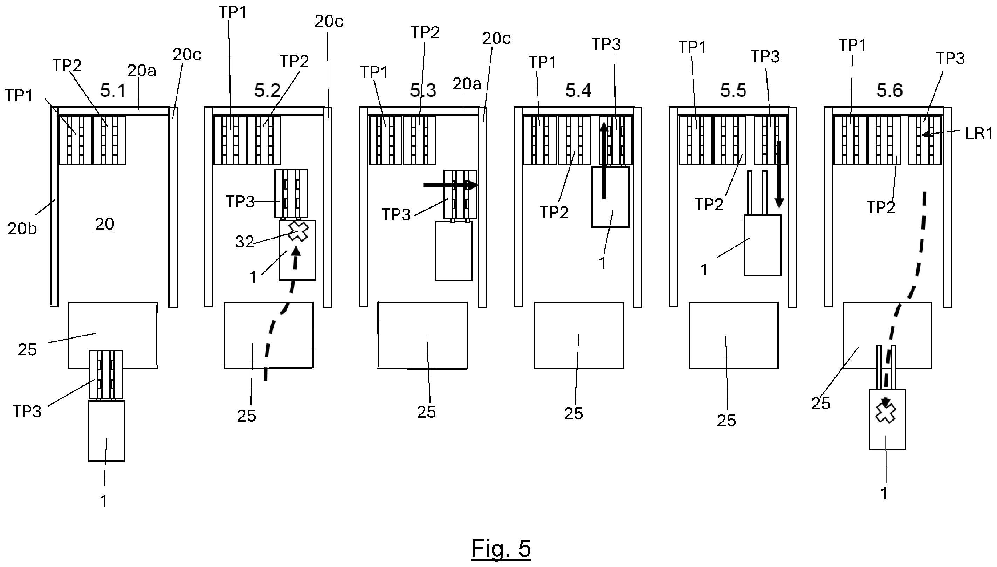

Anschließend nimmt das autonome Flurförderzeug 1 eine dritte Transportpalette TP3 mit den Gabelzinken 4a 4b auf, wobei die Transportpalette TP3 ebenfalls derart aufgenommen wird, dass sich die Transportpalette TP3 auf den Gabelzinken 4a, 4b in Fahrzeugquerrichtung Q und in Fahrzeuglängsrichtung L in Richtung zum Gabelrücken 4b um einige Zentimeter bewegen kann, und fährt zurück auf die Laderampe 25, wie in Bild 5.1 der Figur 5 verdeutlicht ist.

Wie in Bild 5.2 der Figur 5 dargestellt ist, fährt das autonome Flurförderzeug 1 mithilfe von autonomen Navigationsalgorithmen und Positionscontrollern auf der Ladefläche 20 auf eine weitere Vorposition 32 für die dritte Transportpalette TP3 der Ladereihe LR1. Für die dritte Transportpalette TP2 ist die Vorposition 32 rechts, dicht an der zweiten seitlichen Ladewand 20c orientiert, so dass ca. 10cm Platz zwischen dem Flurförderzeug 1 und der zweiten seitlichen Ladewand 20c sind sowie zwischen der Vorderseite der aufgenommenen Transportpalette TP3 und der vorderen Ladewand 20a der Ladefläche 20 ein Abstand von größer einer Länge der Transportpaletten TP ist, beispielsweise ein Abstand von 130cm, sind. Die Gabelzinken 4a, 4b werden abgesenkt, so dass die aufgenommene Transportpalette TP3 geringfügig, beispielswese 2cm, über dem Boden gehalten wird.

Anschließend wird über das "Sideshift-Servoing" nach rechts die dritte Transportpalette TP3 auf Kontakt zu der zweiten seitlichen Ladewand 20c verschoben, wie in Bild 5.3 der Figur 5 verdeutlicht ist.

Anschließend wird - wie in Bild 5.4 der Figur 5 dargestellt ist - das "Forward-Servoing" durchgeführt, wobei die dritte Transportpalette TP3 in den übrig gebliebenen Platz zwischen der zweiten seitlichen Ladewand 20c und der bereits auf der Ladefläche 20 abgesetzten zweiten Transportpalette TP2 geschoben wird, bis die Vorderseite der auf den Gabelzinken 4a, 4b befindlichen dritten Transportpalette TP3 auf Kontakt mit der vorderen Ladewand 20a der Ladefläche 20 ist.

Anschließend wird durch Absenken der Gabelzinken 4a, 4b die Transportplatte TP3 auf die Ladefläche 20 abgesenkt. Anschließend fährt das autonome Flurförderzeug geradlinig rückwärts aus der abgesetzten Transportpalette TP3 heraus - wie in Bild 5.5 der Figur 5 verdeutlicht ist - und anschließend über geeignete autonome Navigationsalgorithmik aus der Ladefläche 20 heraus, wie in Bild 5.6 der Figur 5 verdeutlicht ist.

Anschließend werden mit dem autonomen Flurförderzeug 1 die Transportpaletten TP1, TP2, TP3 der weiteren Ladereihen LR2, LR3 auf der Ladefläche 20 analog zu den Figuren 3 bis 5 abgesetzt mit dem Unterscheid, dass die Transportpaletten TP1, TP2, TP3 der weiteren Ladereihen LR2, LR3 beim "Forward-Serviong" nach Vorne auf Kontakt mit den bereits auf der Ladefläche 20 abgesetzten Transportpaletten TP1, TP2, TP3 der jeweiligen vorderen Ladereche LR1 bzw. LR2 geschoben werden.

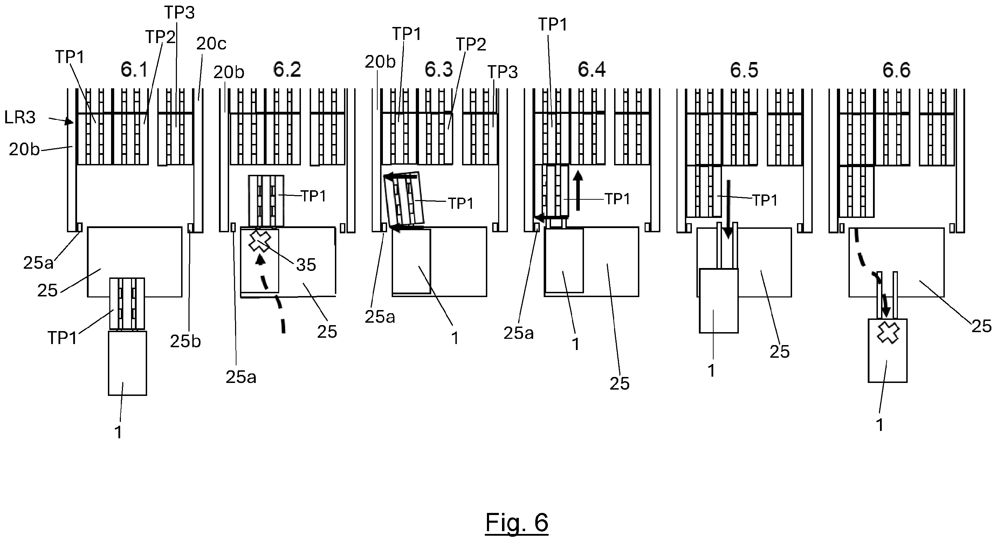

Das Verladen der drei Transportpaletten TP1, TP2, TP3 der Abschlussreihe AR wird im Folgenden anhand der Figuren 6 bis 8 beschrieben.

In der Abschlussreihe AR wird eine veränderte Verladereihenfolge der drei Transportpaletten TP1, TP2, TP3 verwendet, wobei zuerst ein erster, äußerer Ladungsträger, der als Transportpalette TP1 ausgebildet ist, anliegend an die erste seitliche Ladewand 20b auf der Ladefläche 20 abgesetzt wird, anschließend ein zweiter, äußerer Ladungsträger, der als Transportpalette TP2 ausgebildet ist, anliegend an die zweite seitliche Ladewand 20c auf der Ladefläche 20 abgesetzt wird, und anschließend ein dritter, mittlerer Ladungsträger, der als Transportpalette TP3 ausgebildet ist, zwischen dem ersten Ladungsträger TP1 und dem zweiten Ladungsträger TP2 auf der Ladefläche 20 abgesetzt wird.

Zum Verladen der ersten Transportpalette TP1 der Abschlussreihe AR nimmt das autonome Flurförderzeug 1 die Transportpalette TP1 mit den Gabelzinken 4a 4b auf, wobei die Transportpalette TP1 ebenfalls derart aufgenommen wird, dass sich die Transportpalette TP1 auf den Gabelzinken 4a, 4b in Fahrzeugquerrichtung Q und in Fahrzeuglängsrichtung L in Richtung zum Gabelrücken 4b um einige Zentimeter bewegen kann, wie in Bild 6.1 der Figur 6 verdeutlicht ist.

Wie in Bild 6.2 der Figur 6 dargestellt ist, fährt das autonome Flurförderzeug 1 mithilfe von autonomen Navigationsalgorithmen und Positionscontrollern auf die Verladerampe 25 auf eine Vorposition 35 für die erste Transportpalette TP1 der Abschlussreihe AR.

Die Vorposition 35 befindet sich auf der Verladerampe 25, wobei die Vorposition 35 derart gewählt ist, dass nach links ein geeigneter Abstand zwischen der Transportpalette TP1 und der ersten seitlichen Ladewand 20b ist sowie nach vorne ein geeigneter Abstand zwischen der Vorderseite der aufgenommenen Transportpalette TP1 und der Transportpalette TP1 der Ladereihe LR3 ist. Die Gabelzinken 4a, 4b werden abgesenkt, so dass die aufgenommene Transportpalette TP1 geringfügig, beispielswese 2cm, über dem Boden gehalten wird.

Anschließend wird das "Sideshift-Servoing" nach links durchgeführt. Im dargestellten Ausführungsbeispiel sind an der Laderampe 25 vertikale Führungsschienen 25a, 25b für ein Rolltor vorgesehen. Mit dem "Sideshift-Servoing" nach links wird die Transportpalette TP1 schräg mit der ersten seitlichen Ladewand 20b und der Führungsschiene 25a des Rolltores ausgerichtet, wie in Bild 6.3 der Figur 6 verdeutlicht ist. Falls keine vertikale Führungsschiene 25a vorhanden ist, dann richtet sich die Transportpalette TP1 mit dem "Sideshift-Servoing" gerade zur ersten seitlichen Ladewand 20b aus.

Anschließend wird das "Forward-Servoing" durchgeführt, wodurch die Transportpalette TP1 nach vorne auf Kontakt zu der Transportpalette TP1 der Ladereihe LR3 verschoben und zu der Transportpalette TP1 der Ladereihe LR3 fluchtend ausgerichtet wird. Sofern die Transportpalette TP1 bei dem "Sideshift-Servoing" aufgrund der Führungsschiene 25a des Rolltores schräg ausgerichtet war, wird mit dem "Forward-Servoing" die auf den Gabelzinken 4a, 4b befindliche Transportpalette TP1 gerade gedrückt, so dass die Palettenseite, die am Gabelträger liegt, in Richtung der ersten seitlichen Ladewand 20b schwingt und sich die Transportpalette TP1 hinter die Führungsschiene 25a schiebt, wie in Bild 6.4 der Figur 6 veranschaulicht ist.

Anschließend wird durch Absenken der Gabelzinken 4a, 4b die Transportplatte TP1 auf die Ladefläche 20 abgesenkt. Anschließend fährt das autonome Flurförderzeug 1 geradlinig rückwärts aus der abgesetzten Transportpalette TP1 heraus - wie in Bild 6.5 der Figur 6 verdeutlicht ist - und anschließend über geeignete autonome Navigationsalgorithmik von der Laderampe 25, wie in Bild 6.6 der Figur 6 verdeutlicht ist.

Sofern die Laderampe 25 geneigt ist, kann nach dem Absetzten der Transportpalette TP1 zum Herausfahren der Gabelzinken 4, 4b aus der abgesetzten Transportpalette TP1 der Hubmast 6 mittels des Neigeantriebs 9a, 9b entsprechend zur Rampensteigung der Laderampe 25 geneigt werden, um zu verhindern, dass die Transportpalette TP1 wieder von der Ladefläche 20 gezogen wird.

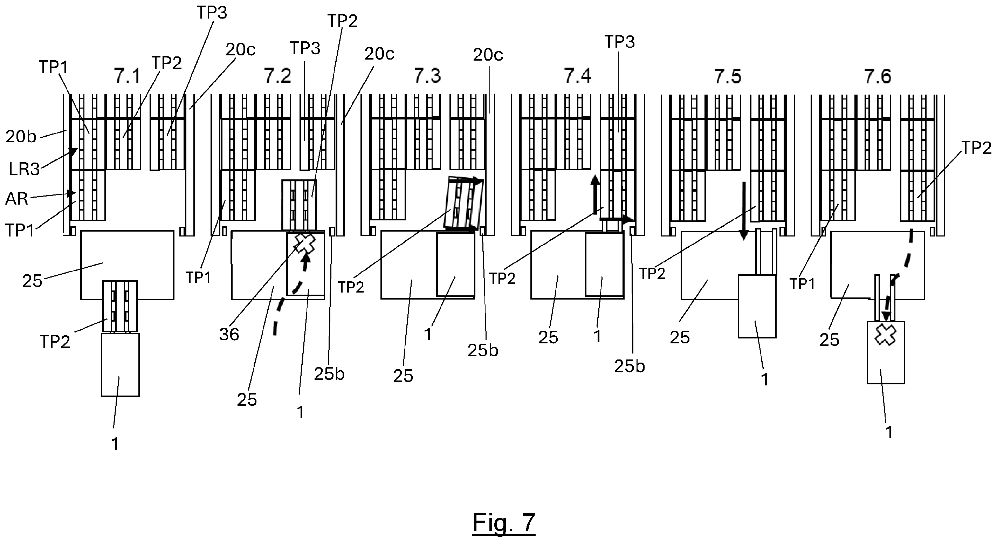

Anschließend nimmt das autonome Flurförderzeug 1 die zweite Transportpalette TP2 der Abschlussreihe AR mit den Gabelzinken 4a 4b auf, wobei die Transportpalette TP2 ebenfalls derart aufgenommen wird, dass sich die Transportpalette TP2 auf den Gabelzinken 4a, 4b in Fahrzeugquerrichtung Q und in Fahrzeuglängsrichtung L in Richtung zum Gabelrücken 4b um einige Zentimeter bewegen kann, wie in Bild 7.1 der Figur 7 verdeutlicht ist.

Wie in Bild 7.2 der Figur 7 dargestellt ist, fährt das autonome Flurförderzeug 1 mithilfe von autonomen Navigationsalgorithmen und Positionscontrollern auf die Verladerampe 25 auf eine Vorposition 36 für die zweite Transportpalette TP2 der Abschlussreihe AR. Die Vorposition 36 befindet sich auf der Verladerampe 25, wobei die Vorposition 36 derart gewählt ist, dass nach rechts ein geeigneter Abstand zwischen der Transportpalette TP2 und der zweiten seitlichen Ladewand 20c ist sowie nach vorne ein geeigneter Abstand zwischen der Vorderseite der aufgenommenen Transportpalette TP2 und der Transportpalette TP3 der Ladereihe LR3 ist. Die Gabelzinken 4a, 4b werden abgesenkt, so dass die aufgenommene Transportpalette TP2 geringfügig, beispielswese 2cm, über dem Boden gehalten wird.

Anschließend wird das "Sideshift-Servoing" nach rechts durchgeführt. Mit dem "Sideshift-Servoing" nach rechts wird die Transportpalette TP2 schräg mit der zweiten seitlichen Ladewand 20c und der Führungsschiene 25b des Rolltores ausgerichtet, wie in Bild 7.3 der Figur 7 verdeutlicht ist. Falls keine vertikale Führungsschiene 25b vorhanden ist, dann richtet sich die Transportpalette TP2 mit dem "Sideshift-Servoing" gerade zur zweiten seitlichen Ladewand 20c aus.

Anschließend wird das "Forward-Servoing" durchgeführt, wodurch die Transportpalette TP2 nach vorne auf Kontakt zu der Transportpalette TP3 der Ladereihe LR3 verschoben und zu der Transportpalette TP3 der Ladereihe LR3 fluchtend ausgerichtet wird. Sofern die Transportpalette TP2 bei dem "Sideshift-Servoing" aufgrund der Führungsschiene 25b des Rolltortes schräg ausgerichtet war, wird mit dem "Forward-Servoing" die auf den Gabelzinken 4a, 4b befindliche Transportpalette TP2 gerade gedrückt, so dass die Palettenseite, die am Gabelträger liegt, in Richtung der zweiten seitlichen Ladewand 20c schwingt und sich die Transportpalette TP2 hinter die Führungsschiene 25b schiebt, wie in Bild 7.4 der Figur 7 veranschaulicht ist.

Anschließend wird durch Absenken der Gabelzinken 4a, 4b die Transportplatte TP2 auf die Ladefläche 20 abgesenkt. Anschließend fährt das autonome Flurförderzeug 1 geradlinig rückwärts aus der abgesetzten Transportpalette TP2 heraus - wie in Bild 7.5 der Figur 7 verdeutlicht ist - und anschließend über geeignete autonome Navigationsalgorithmik von der Laderampe 25, wie in Bild 7.6 der Figur 7 verdeutlicht ist.

Sofern die Laderampe 25 geneigt ist, kann nach dem Absetzten der Transportpalette TP2 zum Herausfahren der Gabelzinken 4, 4b aus der abgesetzten Transportpalette TP2 der Hubmast 6 mittels des Neigeantriebs 9a, 9b entsprechend zur Rampensteigung der Laderampe 25 geneigt werden, um zu verhindern, dass die Transportpalette TP2 wieder von der Ladefläche 20 gezogen wird.

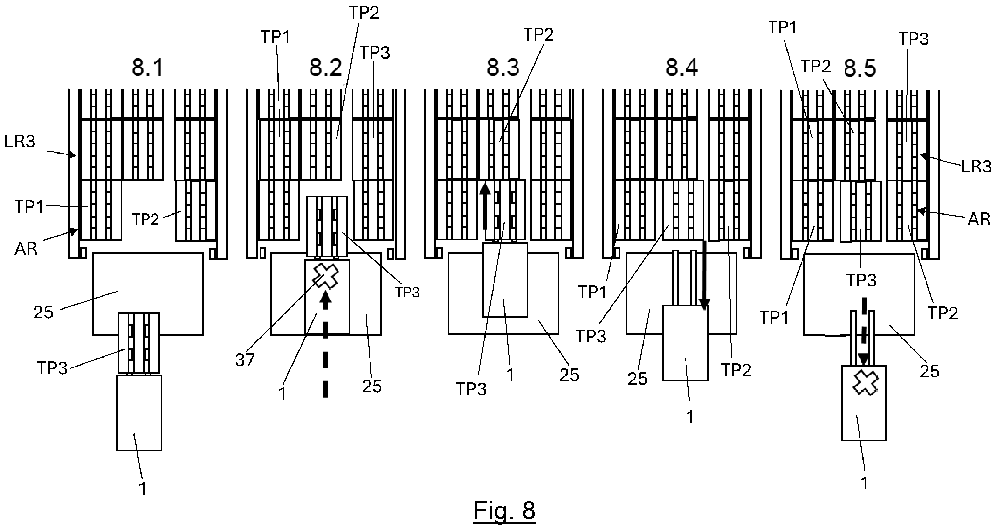

Anschließend nimmt das autonome Flurförderzeug 1 die dritte Transportpalette TP3 der Abschlussreihe AR mit den Gabelzinken 4a 4b auf, wobei die Transportpalette TP3 ebenfalls derart aufgenommen wird, dass sich die Transportpalette TP3 auf den Gabelzinken 4a, 4b in Fahrzeugquerrichtung Q und in Fahrzeuglängsrichtung L in Richtung zum Gabelrücken 4b um einige Zentimeter bewegen kann, wie in Bild 8.1 der Figur 8 verdeutlicht ist.

Wie in Bild 8.2 der Figur 8 dargestellt ist, fährt das autonome Flurförderzeug 1 mithilfe von autonomen Navigationsalgorithmen und Positionscontrollern auf die Verladerampe 25 auf eine Vorposition 37 für die dritte Transportpalette TP3 der Abschlussreihe AR. Die Vorposition 37 befindet sich auf der Verladerampe 25, wobei die Vorposition 37 derart gewählt ist, dass diese mittig zur Ladefläche 20 ist und nach vorne ein geeigneter Abstand, beispielsweise von 130cm, zwischen der Vorderseite der aufgenommenen Transportpalette TP3 und der Transportpalette TP2 der Ladereihe LR3 ist. Die Gabelzinken 4a, 4b werden abgesenkt, so dass die aufgenommene Transportpalette TP3 geringfügig, beispielswese 2cm, über dem Boden gehalten wird.

Zum Absetzen der Transportpalette TP3 der Abschlussreihe AR wird nur das "Forward-Servoing" durchgeführt, wodurch die Transportpalette TP3 nach vorne auf Kontakt zu der Transportpalette TP2 der Ladereihe LR3 verschoben wird, wie in Bild 8.3 der Figur 8 dargestellt ist.

Anschließend wird durch Absenken der Gabelzinken 4a, 4b die Transportplatte TP3 auf die Ladefläche 20 abgesenkt. Anschließend fährt das autonome Flurförderzeug 1 geradlinig rückwärts aus der abgesetzten Transportpalette TP2 heraus - wie in Bild 8.4 der Figur 8 verdeutlicht ist - und anschließend über geeignete autonome Navigationsalgorithmik von der Laderampe 25, wie in Bild 8.5 der Figur 8 verdeutlicht ist.

Sofern die Laderampe 25 geneigt ist, kann nach dem Absetzten der Transportpalette TP3 zum Herausfahren der Gabelzinken 4, 4b aus der abgesetzten Transportpalette TP3 der Hubmast 6 mittels des Neigeantriebs 9a, 9b entsprechend zur Rampensteigung der Laderampe 25 geneigt werden, um zu verhindern, dass die Transportpalette TP3 wieder von der Ladefläche 20 gezogen wird.

Die Erfindung ist nicht auf das dargestellte Ausführungsbeispiel beschränkt.

Anhand der Figuren 3 bis 8 wurde das Verladen der Transportpaletten TP1, TP2, TP3 der Ladereihen LR1, LR2, LR3 und der Abschlussreihe AR auf der Ladefläche 20 von links nach rechts beschrieben. Es versteht sich, dass das Verladen der Transportpaletten TP1, TP2, TP3 der Ladereihen LR1, LR2, LR3 und der Abschlussreihe AR auf der Ladefläche 20 alternativ von rechts nach links erfolgen kann.

Die Ladefläche 20 kann als Ladefläche eines Lastkraftwagens oder eines Anhängers eines Lastkraftwagens oder eines Containers, beispielsweise eines Seefrachtcontainers, oder eines Eisenbahnwaggons ausgebildet sein. Alternativ kann die Ladefläche 20 eine Ladefläche eines Blocklagers oder eines Flugzeugs sein.

Der Ladungsträger kann als Transportpalette TP oder alternativ als Gitterwagen oder Gitterbox ausgebildet sein.

## Patentansprüche

1. Autonomes, bodengebundenes Flurförderzeug (1) umfassend einen Fahrantrieb und ein Lastaufnahmemittel (4), das als Lastgabel mit zwei Gabelzinken (4a, 4b) ausgebildet ist, **dadurch gekennzeichnet, dass** das Flurförderzeug (1) eine erste Sensoreinrichtung (11) aufweist, die ausgebildet ist, eine Relativbewegung eines auf den Gabelzinken (4a, 4b) befindlichen Ladungsträgers (TP1; TP2, TP3) in Fahrzeugquerrichtung (Q) des Flurförderzeugs zu ermitteln, und eine zweite Sensoreinrichtung (15) aufweist, die ausgebildet ist, eine Relativbewegung des auf den Gabelzinken (4a, 4b) befindlichen Ladungsträgers (TP1; TP2; TP3) in Fahrzeuglängsrichtung (L) des Flurförderzeugs (1) zu ermitteln.

2. Flurförderzeug nach Anspruch 1, **dadurch gekennzeichnet, dass** die erste Sensoreinrichtung (11) mit einer Datenverarbeitungseinrichtung des Flurförderzeugs (1) zur Auswertung der Sensordaten der ersten Sensoreinrichtung (11) in Verbindung steht, wobei die Datenverarbeitungseinrichtung ausgebildet ist, aus den Sensordaten der ersten Sensoreinrichtung (1) eine Bewegung des auf den Gabelzinken (4a, 4b) befindlichen Ladungsträgers (TP1; TP2; TP3) relativ zu den Gabelzinken (4a, 4b) in Fahrzeugquerrichtung (Q) zu erkennen.

3. Flurförderzeug nach Anspruch 1 oder 2, **dadurch gekennzeichnet, dass** die zweite Sensoreinrichtung (15) mit der Datenverarbeitungseinrichtung des Flurförderzeugs (1) zur Auswertung der Sensordaten der zweiten Sensoreinrichtung (15) in Verbindung steht, wobei die Datenverarbeitungseinrichtung ausgebildet ist, aus den Sensordaten der zweiten Sensoreinrichtung (15) eine Bewegung des auf den Gabelzinken (4a, 4b) befindlichen Ladungsträgers (TP1; TP2; TP3) relativ zu den Gabelzinken (4a, 4b) in Fahrzeuglängsrichtung (L) in Richtung eines Gabelrückens (4d) der Gabelzinken (4a, 4b) zu erkennen.

4. Flurförderzeug nach Anspruch 2 oder 3, **dadurch gekennzeichnet, dass** das Flurförderzeug (1) einen Fahrantrieb umfasst, der ausgebildet ist, das Flurförderzeug (1) in Fahrzeuglängsrichtung (L) zu verfahren, wobei die Datenverarbeitungseinrichtung ausgebildet ist, den Fahrantrieb bei Erkennen einer Bewegung des auf den Gabelzinken (4a, 4b) befindlichen Ladungsträgers (TP1; TP2; TP3) relativ zu den Gabelzinken (4) in Fahrzeuglängsrichtung (L) in Richtung des Gabelrückens (4d) der Gabelzinken (4) zu stoppen.

5. Flurförderzeug nach einem der Ansprüche 2 bis 4, **dadurch gekennzeichnet, dass** der Fahrantrieb ausgebildet ist, das Flurförderzeug (1) in Fahrzeugquerrichtung (Q) zu verfahren, wobei die Datenverarbeitungseinrichtung ausgebildet ist, den Fahranrieb bei Erkennen einer Bewegung des auf den Gabelzinken (4a, 4b) befindlichen Ladungsträgers (TP1, TP2, TP3) relativ zu den Gabelzinken (4a, 4b) in Fahrzeugquerrichtung (Q) zu stoppen.

6. Flurförderzeug nach einem der Ansprüche 2 bis 4, **dadurch gekennzeichnet, dass** das Flurförderzeug eine Seitenschiebereinrichtung (10) umfasst, die ausgebildet ist, das Lastaufnahmemittel (4) in Fahrzeugquerrichtung (Q) zu verfahren, wobei die Datenverarbeitungseinrichtung ausgebildet ist, die Seitenschiebereinrichtung (10) bei Erkennen einer Bewegung des auf den Gabelzinken (4a, 4b) befindlichen Ladungsträgers (TP1; TP2; TP3) relativ zu den Gabelzinken (4a, 4b) in Fahrzeugquerrichtung (Q) zu stoppen.

7. Flurförderzeug nach einem der Ansprüche 1 bis 6, **dadurch gekennzeichnet, dass** die erste Sensoreinrichtung (11) und/oder die zweite Sensoreinrichtung (15) mindestens einen Abstandssensor (11a, 11b, 11c, 11d, 11e, 11f) in mindestens einer Gabelzinke (4a; 4b) aufweist, der ausgebildet ist, eine auf den Gabelzinken (4a; 4b) aufgenommene Transportpalette (TP1; TP2; TP3) als Ladungsträger zu erfassen.

8. Flurförderzeug nach einem der Ansprüche 1 bis 6, **dadurch gekennzeichnet, dass** die erste Sensoreinrichtung (11) und/oder die zweite Sensoreinrichtung (15) mindestens eine Kamera aufweist.

9. Flurförderzeug nach einem der Ansprüche 1 bis 6, **dadurch gekennzeichnet, dass** die erste Sensoreinrichtung (11) und/oder die zweite Sensoreinrichtung (15) einen Stromsensor und/oder einen Drehmomentsensor aufweist, der ausgebildet, den elektrischen Strom und/oder das Drehmoment eines elektrischen Fahrmotors des Fahrantriebs zu ermitteln.

10. Flurförderzeug nach einem der Ansprüche 1 bis 6, **dadurch gekennzeichnet, dass** die erste Sensoreinrichtung (11) einen Stromsensor und/oder einen Drehmomentsensor aufweist, der ausgebildet, den elektrischen Strom und/oder das Drehmoment eines elektrischen Antriebsmotors der Seitenschiebereinrichtung (10) zu ermitteln.

11. Flurförderzeug nach einem der Ansprüche 1 bis 6, **dadurch gekennzeichnet, dass** die zweite Sensoreinrichtung (15) eine Lastklappe (16) aufweist, die ausgebildet ist, das Anliegen des Ladungsträgers (TP1; TP2; TP3) oder einer auf dem Ladungsträger (TP1; TP2; TP3) angeordneten Last an dem Gabelrücken (4d) oder einem Gabelträger (5) zu erfassen, wobei an dem Gabelträger (5) die Gabelzinken (4a, 4b) mit den Gabelrücken (4d) angeordnet sind.

12. Flurförderzeug nach einem der Ansprüche 1 bis 11, **dadurch gekennzeichnet, dass** das Flurförderzeug (1) einen Hubmast (6) aufweist, an dem das Lastaufnahmemittel (4) mittels eines Hubantriebs (7) anhebbar und absenkbar ist.

13. Flurförderzeug nach Anspruch 12, **dadurch gekennzeichnet, dass** der Hubmast (6) mittels eines Neigeantriebs (9a, 9b) um eine Neigeachse (8) neigbar ist.

14. Flurförderzeug nach einem der Ansprüche 1 bis 13, **dadurch gekennzeichnet, dass** das Flurförderzeug (1) eine Umfeldsensorik (12) aufweist, insbesondere einen 2D-Lasersensor oder einen 3D-Lasersensor.

15. Verfahren zum Beladen einer Ladefläche (20), insbesondere einer Ladefläche eines Lastkraftwagens einer eines LKW-Anhängers oder eines Containers, mit Ladungsträgern (TP1; TP2; TP3) mittels eines autonomen, bodengebundenen Flurförderzeugs (1) nach einem der vorangegangenen Ansprüche, **dadurch gekennzeichnet, dass** beim Beladen der Ladefläche (20) mit einem Ladungsträger (TP1; TP2; TP3) in einem ersten Schritt das Flurförderzeug (1) mit dem auf den Gabelzinken (4a, 4b) befindlichen Ladungsträger (TP1; TP2; TP3) an eine Vorposition (30; 31; 32; 35; 36; 37) auf der Ladefläche (20) verfahren wird, insbesondere mittels des Fahrantriebs, in einem anschließenden zweiten Schritt eine Bewegung der Gabelzinken (4a; 4b) in Fahrzeugquerrichtung (Q) durchgeführt wird, insbesondere mittels des Fahrantriebs oder einer Seitenschiebereinrichtung (10), wobei bei Erkennen einer Bewegung des auf den Gabelzinken (4a, 4b) befindlichen Ladungsträgers (TP1; TP2; TP3) relativ zu den Gabelzinken (4a, 4b) in Fahrzeugquerrichtung (Q) die Bewegung der Gabelzinken (4a, 4b) in Fahrzeugquerrichtung (Q) gestoppt wird, in einem anschließenden dritten Schritt eine Vorwärtsfahrbewegung des Flurförderzeugs (1) durchgeführt wird, insbesondere mittels des Fahrantriebs, wobei bei Erkennen einer Bewegung des auf den Gabelzinken (4a, 4b) befindlichen Ladungsträgers (TP1; TP2; TP3) relativ zu den Gabelzinken (4a, 4b) in Fahrzeuglängsrichtung (L) in Richtung eines Gabelrückens (4d) der Gabelzinken (4a, 4b) die Vorwärtsfahrbewegung des Flurförderzeugs (1) gestoppt wird, in einem anschließenden vierten Schritt der Ladungsträger (TP1; TP2; TP3) auf die Ladefläche (20) abgesenkt wird, und in einem anschließenden fünften Schritt eine Rückwärtsfahrbewegung des Flurförderzeugs (1) durchgeführt wird, insbesondere mittels des Fahrantriebs, mit der die Gabelzinken (4a, 4b) aus dem abgesetzten Ladungsträger (TP1; TP2; TP3) herausgefahren werden.

16. Verfahren nach Anspruch 15, **dadurch gekennzeichnet, dass** die Ladefläche (20) reihenweise mit Ladungsträgern (TP1; TP2; TP3) beladen wird, wobei pro Ladereihe (LR1; LR2; LR3) ein erster, äußerer Ladungsträger (TP1) anliegend an eine erste seitliche Ladewand (20b; 20c) auf der Ladefläche (20) abgesetzt wird, anschließend ein zweiter, mittlerer Ladungsträger (TP2) anliegend an den ersten Ladungsträger (TP1) auf der Ladefläche (20) abgesetzt wird, und anschließend ein dritter, äußerer Ladungsträger (TP3) anliegend an eine zweite seitliche Ladewand (20c; 20b) auf der Ladefläche (20) abgesetzt wird.

17. Verfahren nach Anspruch 16, **dadurch gekennzeichnet, dass** in einer Abschlußreihe (AR) ein erster, äußerer Ladungsträger (TP1) anliegend an eine erste seitliche Ladewand (20b; 20c) auf der Ladefläche (20) abgesetzt wird, anschließend ein zweiter, äußerer Ladungsträger (TP2) anliegend an eine zweite seitliche Ladewand (20c; 20b) auf der Ladefläche (20) abgesetzt wird, und anschließend ein dritter, mittlerer Ladungsträger (TP3) zwischen dem ersten Ladungsträger (TP1) und dem zweiten Ladungsträger (TP2) auf der Ladefläche (20) abgesetzt wird.
